# EUROPEAN PATENT APPLICATION

(11) **EP 2 894 890 A1**
(43) Date of publication of application: **15.07.2015**
(21) Application number: 14150626.1
(22) Date of filing: 09.01.2014
(51) Int. Cl.: H04W 12/06, H04W 60/00

(54) **Conditional access to a wireless network**

(71) Applicant: Koninklijke KPN N.V., 2516 CK The Hague (NL); Nederlandse Organisatie voor toegepast- natuurwetenschappelijk onderzoek TNO, 2595 DA 's-Gravenhage (NL)
(72) Inventor: Busropan, Bryan Jerrel, Den Haag 2492 MR (NL); Norp, Antonius, 2584 EN The Hague (NL); Schenk, Michael, 2513 BZ The Hague (NL); Hillen, Bernardus, 2725 DP Zoetermeer (NL); de Kievit, Sander, 2317 AG Leiden (NL)
(74) Representative: Wuyts, Koenraad Maria

(57) **Abstract**

The invention provides a computer-implemented method for authorizing access to a first wireless network, such as a WLAN, using a mobile device that is roaming on a second wireless network, such as a visited cellular network or VPLMN, associated with the first wireless network. The mobile device is subscribed to a third wireless network, such as a home cellular network or HPLMN. An identifier is received from the mobile device in an access server of the first wireless network. The access server verifies, based on the identifier, whether the mobile device is communicatively connected to the second wireless network. Depending on the verification result, authorization data is provided to the access server and/or to the mobile device for allowing the mobile device or another wireless device to access the first wireless network.

## Description

### FIELD OF THE INVENTION

Generally, the invention relates to the field of wireless telecommunications. More specifically, the invention relates to conditionally accessing multiple networks.

### BACKGROUND

Network operators have a general interest of attracting users to their network. This is especially true for mobile operators and roaming users, as roaming charges are typically higher than local charges. Roaming users, which are for example users of mobile devices attaching to a foreign mobile network when abroad, typically have a choice of mobile networks to connect to. Operators are interested to gain a larger share of the roaming users in a given geographical area. One of the ways to attract users to a particular network is by offering free services. An example of such a service could be free access or use of hotspots managed by the mobile operator for those users that are roaming in the operators network.

WO 2012/172533 discloses a device authentication method, wherein an authentication system (e.g. that of a WLAN) performs a query to the mobile network of the subscriber to validate the subscriber and resolve the subscriber and device identifiers. Hereby it is verified in the mobile network of the subscriber, i.e. the home mobile network, whether the user is registered to access the WLAN. This method may work if the subscriber is connected to his home mobile network, but when the subscriber is roaming, the home mobile network of the user is typically not queryable from the WLAN network to obtain subscription information related to the WLAN network.

There is a need for an improved solution that allows e.g. a mobile operator to grant or deny access to e.g. a WLAN when a user is roaming in the network of the mobile operator. More generally, there is a need for a solution that allows an operator of a second wireless network to grant access to a first wireless network associated with the second wireless network when a user's mobile device is roaming in the second wireless network.

### SUMMARY OF THE INVENTION

A solution is proposed that allows an operator of a second wireless network to grant access to a first wireless network associated with the second wireless network based on whether a user's mobile device is roaming in the second wireless network.

According to an aspect of the invention a computer-implemented method is proposed for authorizing access to a first wireless network using a mobile device that is roaming on a second wireless network. The first wireless network is e.g. a WLAN or any other wireless network. The second wireless network is e.g. a visited cellular network or VPLMN or any other wireless network. The second wireless network is associated with the first wireless network. The mobile device is subscribed to a third wireless network, such as a home cellular network or HPLMN or any other wireless network. The method can comprise receiving an identifier from the mobile device in an access server of the first wireless network. The method can further comprise the access server verifying, based on the identifier, whether the mobile device is communicatively connected to the second wireless network to obtain a verification result. The method can further comprise providing first authorization data to the access server for allowing the mobile device to access the first wireless network. The method can further comprise providing second authorization data to the mobile device for allowing the mobile device and/or a wireless device to access the first wireless network. An advantage of the latter would be that the user can be allowed to use one or more wireless devices other than the mobile device on the first wireless network. Moreover, even if the mobile device does not support the first wireless network, several embodiments described hereafter can be used as long as the user has a wireless device that does support the first wireless network. The providing of the authorization data can depend on the verification result.

Using the identifier it may thus be verified that the mobile device, which is subscribed to the third wireless network, is connected to the second wireless network. This is the case if the mobile device is e.g. roaming on the second wireless network, e.g. a visited mobile network or VPLMN. In wireless telecommunications, roaming is a general term referring to the extension of connectivity service in a location that is different from the home location where the service was registered.

The identifier may be related to the mobile device, to the user or subscription of the mobile device, or to the network to which the mobile device is connected. In any case, the identifier is providable by the mobile device to the access server.

The identifier may be provided from the mobile device to the access server directly or indirectly. An example of an indirect provisioning of the identifier is via a web based access portal. The identifier may be provided automatically, i.e. without user interaction, or manually, i.e. with user interaction. Herein the user is the user of the mobile device. It is possible that the identifier is manually provided using the wireless device via the access portal.

A web server may be part of the first wireless network or communicatively connected to the first wireless network, e.g. as a web server on the Internet. It is possible that the web server is integrated with the access server. The web server may be used to provide the access portal to the mobile device and/or the wireless device for providing e.g. the identifier to the access server before being allowed to use the first wireless network.

Because the second wireless network is associated with the first wireless network, network nodes in the two networks may be allowed to exchange information which may not be exchangeable if the association did not exist. An example hereof is the identifier that may be transmitted from the access server to a node in the second wireless network in the verification process. Another example is the verification result indicating whether the mobile device is communicatively connected to the second wireless network, which may be received from a node in the second wireless network.

The authorization data may be received in the mobile device, for example in the form of access credentials. This authorization data may be used in another wireless device to access the first wireless network. Hereto, the access credentials, for example, may be read from a display of the mobile device and typed-in on the wireless device. The wireless device typically has access to the first wireless network only if and possibly only while the mobile device is connected to the second wireless network. The wireless device may be any device communicatively compatible with the first wireless network. If the first wireless network is e.g. a WLAN network, then the wireless device may be a Wi-Fi-only device, another mobile device with both cellular and Wi-Fi communication possibilities, or any other wireless device compatible with the WLAN. The wireless device may be a device on a fixed location with wireless communication possibilities or a portable device.

In an embodiment the identifier can be related to the second wireless network. The identifier can be obtained from the second wireless network in the mobile device prior to receiving the identifier from the mobile device in the access server. The verifying can comprise looking up the identifier in a database that is communicatively connected to the access server.

The identifier is e.g. an identifier of the VPLMN, a temporary mobile subscriber identity (TMSI) from which it may be determined that the mobile device is connected to the VPLMN or a cell-ID identifying to which base station in the VPLMN the mobile device is connected. This identifier is typically available in the mobile device if connected to the second wireless network. An app or any other software code running on the mobile device may be used to obtain the identifier for transmission to the access server.

In an embodiment the identifier can be related to the mobile device. The verifying can comprise transmitting the identifier to a node in the second wireless network and in response receiving an indication that the mobile device is communicatively connected to the second wireless network.

Here, the identifier is e.g. an MSIDSN or IMSI, or any other identifier, such as an UUID or IMEI, identifying the mobile device or the user of the mobile device.

In an embodiment the node can comprise an interception device for intercepting messages in the second wireless network. The verifying can further comprise transmitting an SMS message to the mobile device. The verifying can further comprise intercepting, using the identifier, the SMS message in the interception node while the SMS message is being delivered to the mobile device. The verifying can further comprise transmitting the indication that the mobile device is communicatively connected to the second wireless network from the interception node to the access server if the SMS message is intercepted.

The identifier may be used for transmitting the SMS message to the mobile device. The SMS message typically follows a path from the second wireless network to the third wireless network and then via the second wireless network to the mobile device. When the SMS message is in transmission from the third wireless network to the mobile device via the second wireless network, the SMS message may be intercepted or detected in the second wireless network. Only if the mobile device is connected to the second wireless network, the SMS will actually be delivered via the second wireless network. If the SMS message is intercepted or detected, it may thus be concluded that the mobile device is connected to the second wireless network.

In an embodiment the verifying can comprise determining whether the identifier or a derivation of the identifier is registered in a registration database in the second wireless network. The registration database is e.g. as a visitor location register or VLR or any other registration database. The registration database can be configured for registering mobile devices in the second wireless network.

When the mobile device is connected to the second wireless network, it is typically registered in a registration database of the second wireless network. This registration may be used directly or indirectly in the determination whether the mobile device is connected to the second wireless network. A direct determination means that the registration database may be queried directly. An example of an indirect determination is that the registration database is used in a process of transmitting messages, which messages are then used to determine whether the mobile device is connected to the second wireless network.

In an embodiment the node can comprise the registration database. The verifying can comprise looking up the identifier in the registration database. The verifying can further comprise transmitting the indication that the mobile device is communicatively connected to the second wireless network from the node to the access server if the identifier is found in the registration database.

When the mobile device is connected to the second wireless network, it is typically registered in a registration database of the second wireless network. Such registration is typically temporary, i.e. for the time that the mobile device is connected to the network. By verifying the registration in the database it may be determined whether the mobile device is connected to the second wireless network.

In an embodiment the node can be communicatively connected to the registration database. The verifying can comprise transmitting the identifier from the node to the registration database. The verifying can further comprise receiving the indication that the mobile device is communicatively connected to the second wireless network from the registration database in the node. The verifying can further comprise transmitting the indication that the mobile device is communicatively connected to the second wireless network from the node to the access server.

When the mobile device is connected to the second wireless network, it is typically registered in a registration database of the second wireless network. Such registration is typically temporary, i.e. for the time that the mobile device is connected to the network. By verifying via the node the registration in the database it may be determined whether the mobile device is connected to the second wireless network.

In an embodiment the identifier can be received from the mobile device in the access server using an authentication protocol, such as EAP-SIM or EAP-AKA.

This enables use of standardized methods for exchanging the identifier.

In an embodiment the identifier can be related to the mobile device. The verifying can comprise transmitting the identifier to a node in the third wireless network and in response receiving an indication that the mobile device is communicatively connected to the second wireless network.

The identifier may be used to transmit a message, such as an Initial Address Message (IAM message), to the third wireless network. In response the indication that the mobile device is connected to the second wireless network may be received, e.g. in the form of an address in the second wireless network from where the mobile device may be reached. This verifying step typically operates on a network level, i.e. it provides information about the whereabouts of the mobile device in the second wireless network, which information is provided by the third wireless network.

In an embodiment the verifying can comprise transmitting an IAM message to the node using the identifier. The indication can comprise a network identifier of the second wireless network.

This advantageously enables the standardized IAM message exchange to be used.

In an embodiment the verifying can be repeated at a predefined trigger. The predefined trigger is e.g. a lapsing of a predefined amount of time, an exceeding of a predefined maximum amount of data transmittable and/or receivable by the mobile device and /or the wireless device, or any other trigger. Access by the mobile device and/or the wireless device to the first wireless network can be revoked depending on the verification result.

This enables continuous monitoring whether the mobile device is connected to the second wireless network. If this is no longer the case, access to the first wireless network may be revoked.

In an embodiment, depending on the verification result, the authorization data can be provided to the mobile device as access credentials allowing the mobile device and/or the wireless device to access the first wireless network using the access credentials.

This enables access credentials to be provided to the mobile device, e.g. in the form of a username and password to be used for connecting to a Wi-Fi hotspot. The access credentials may be used for connecting the mobile device and/or the wireless device to the first wireless network.

In an embodiment, depending on the verification result, the authorization data can be provided to the access server allowing the mobile device to access the first wireless network without access credentials.

This enables authorization data to be provided to the access server in the first wireless network. When the mobile device is recognized in the access server, access to the first wireless network may be granted without further access credentials from the mobile device.

According to an aspect of the invention an access server is proposed comprising means for carrying out one or more of the steps of the method described above.

According to an aspect of the invention a network node is proposed comprising means for carrying out one or more of the steps of the method described above.

According to an aspect of the invention a first wireless network, such as a WLAN or any other wireless network, is proposed that is configured to allow a mobile device access to the first wireless network using one or more of the steps of the method described above.

According to an aspect of the invention a computer program product is proposed, which, when being executed by a processor, is adapted to perform one or more of the steps of the method described above.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to the drawings, in which:
Fig.1 shows a network architecture of an exemplary embodiment of the invention; and
Figs.2-7 show time-sequence diagrams of exemplary embodiments of the invention.

In the time-sequence diagrams network nodes are indicated as boxed with square corners. Arrows indicate a data exchange between network nodes. Data elements or information contained in the data are indicated in between curly brackets. Boxes with rounded corners indicate one or more processing steps. A black dot indicates a processing step.

### DETAILED DESCRIPTION OF THE DRAWINGS

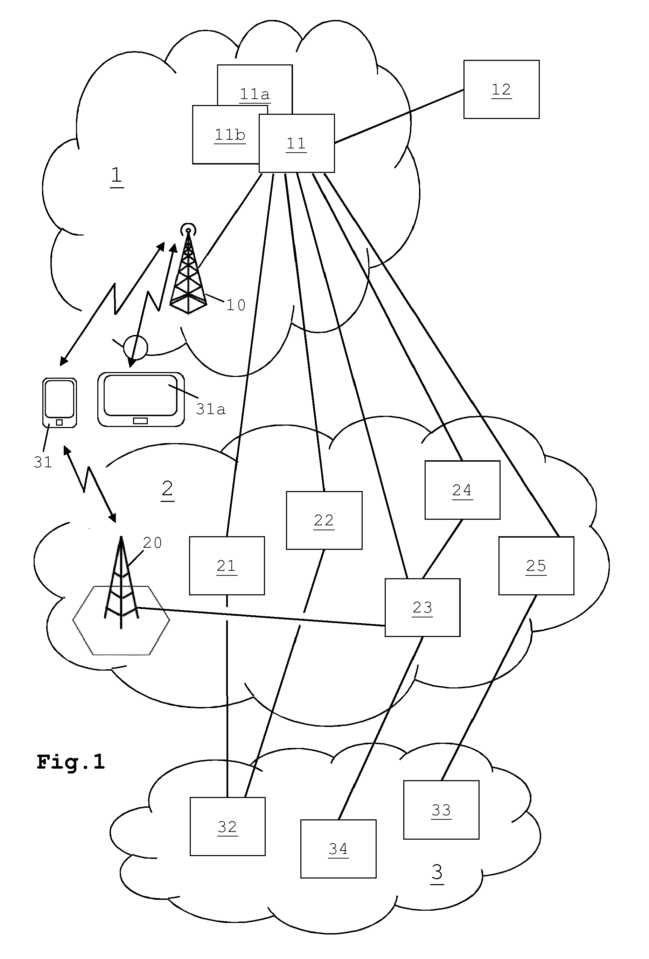

Fig.1 shows a simplified architectural view of three networks 1,2,3, their network elements, a mobile device 31 that makes use of the networks and an optional wireless device 31a that may use the first network 1. Only the main network components relevant to the present invention are shown and how they are communicatively connected. Typically there are further network elements (not shown) involved in the communication between the network elements of Fig.1. When two network elements are communicatively connected, data transmitted from one network element to the other may be processed, modified or transformed by intermediate network elements.

The three networks are called wireless networks, as they allow wireless devices to connect to and make use of the networks. The term 'wireless network' is not to be construed to mean that all communication within the network is wireless. Typically network elements within the networks are connected by wirelines, although wireless connections are possible. The same is true for connections between network elements of different networks.

Examples of mobile devices 31 include mobile phones, smartphones, tablets, phablets, laptop devices, smart watches, and smart glasses that are at least communicatively compatible with the first wireless network and the second wireless network. Examples of wireless devices 31a include mobile phones, smartphones, tablets, phablets, laptop devices, smart watches, smart glasses and smart TVs that are at least communicatively compatible with the first wireless network.

It is assumed that the mobile device 31 has a subscription to the third wireless network 3. The third wireless network 3 is for example a cellular network, which, to the mobile device 31, is the home cellular network or home public land mobile network (HPLMN).

It is further assumed that the mobile device 31 is roaming on the second wireless network 2. This means that the mobile device 31 is e.g. out of range of the third wireless network 3 and instead uses the second wireless network 2 for mobile communication. A typical use case is when the mobile device 31 is in a country different than that of the third wireless network 3. The second wireless network 2 is for example also a cellular network, which, to the mobile device 31, is the visited cellular network or visited public land mobile network (VPLMN). Typically a roaming agreement exists between the VPLMN 2 and the HPLMN 3 to enable e.g. charging and billing of the user of the mobile device 31 while roaming on the VPLMN 2.

The device used to access the first wireless network 1, i.e. the mobile device 31 and/or the wireless device 31a, supports the first wireless network 1, i.e. the radio technology used in the first wireless network. The mobile device 31 supports at least the second and third wireless network. The optional wireless device 31a, if used, supports at least the first wireless network and may or may not support the second and/or third wireless network.

The first wireless network 1 is associated with the second wireless network 2, e.g. by ownership or business relationship between the network operators. Access to the first wireless network 1 is granted dependent on the mobile device 31 making use of the second wireless network 2. The first wireless network 1 is for example a wireless local area network (WLAN). Most modern WLANs are based on IEEE 802.11 standards, marketed under the Wi-Fi brand name. The mobile device 31 and/or the wireless device 31a may be granted access to the WLAN 1 if the mobile device 31 is connected to the VPLMN 2. The user of the mobile device 31 may thus be attracted to use the VPLMN 2 for mobile communication purposes by providing access to the WLAN 2 for data communication purposes. Access to the first wireless network 1 may e.g. be given for free, at a reduced tariff or some other discount or benefit, if making use of the second wireless network 2. When the mobile device 31 is no longer connected to the second wireless network 2, access to the first wireless network 1 may be revoked.

In Fig.1 the following network elements are shown, whereof different combinations are used in following exemplary embodiments. The first wireless network 1 comprises one or more wireless access points 10, such as a WLAN access point or hotspot. An access server 11, which may be integrated with the access point 10, provides access control functionality to the access point 10. An Authentication, Authorization en Accounting (AAA) server may be communicatively connected to or may be a part of the access server 11. A first network gateway (GW) 11b may be communicatively connected to or may be a part of the access server 11. The GW 11 may provide connectivity to other networks, such as the second wireless network 2, and firewall functionality.

A web server 12 may be part of the first wireless network 1 or communicatively connected to the first wireless network, e.g. as a web server on the Internet. It is possible that the web server 12 is integrated with access server 11. The webserver 12 may be used to provide an access portal to the mobile device 31 and/or the wireless device 31a before being allowed to use the first wireless network 1.

The second wireless network 2 comprises one or more base station 20, such as base stations in a cellular network. Network node 21 may comprise an interception device for intercepting messages. Node 21 is for example a signaling system no.7 (SS7) interception device, that may be used for intercepting SMS messages transmitted on SS7 signaling connections between network elements. A first messaging server 22, such as a short message service center (SMSC), may provide messaging functionality, such as transmitting an SMS message to a destination. A first registration database 23, such as a visitor location register (VLR) in the VPLMN, may register the mobile device 31 when attached to the second wireless network 2. Network node 24 may provide functionality to verify whether a mobile device is registered in the registration database 23. A second network gateway 25 may provide connectivity to other networks, such as the first wireless network 1 and the third wireless network 3. In a VPLMN the second network gateway 25 is for example a gateway mobile switching center (GMSC).

The third wireless network 3 comprises one or more base stations (not shown), such as a base station in a cellular network. A second messaging server 32, such as a short message service center (SMSC), may provide messaging functionality, such as transmitting an SMS message to a subscriber's device such as mobile device 31. A third network gateway 33 may provide connectivity to other networks, such as the second wireless network 2. In a HPLMN the third network gateway 33 is for example a GMSC. A second registration database 34, such as a home location register (HLR) in the HPLMN, may keep record of subscriber information of subscribers to the third wireless network, such as subscriber information of the user of mobile device 31.

Mobile device 31 may be wirelessly connected to wireless access point 10 and/or base station 20. The access server 11 may be communicatively connected to network node 21, messaging server 22, first registration database 23, network node 24 and/or second network gateway 25. Second messaging server 32 may be communicatively connected to network node 21 and first messaging server 22. First registration database 23 may be communicatively connected to the base station 20, network node 24 and/or second registration database 34. Second network gateway 25 may be communicatively connected to third network gateway 33. Optionally, wireless device 31a may be wirelessly connected to wireless access point 10.

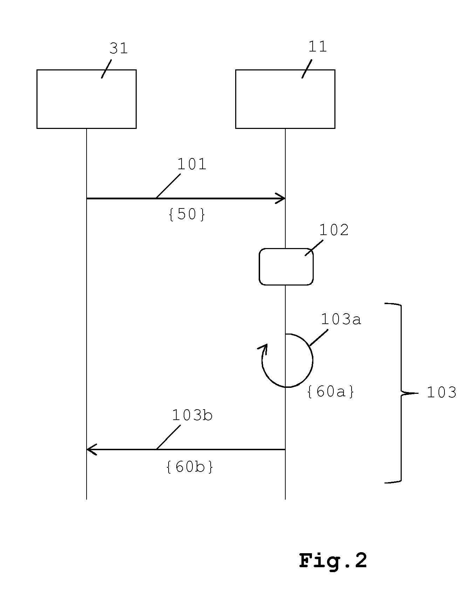

Fig.2 shows a time-sequence diagram of an exemplary embodiment of the invention. In this embodiment the mobile device 31 may be configured to transmit 101 an identifier 50 to an access server 11 of a first wireless network 1. The identifier may be used to verify 102 that the mobile device 31 is connected to the second wireless network 2, before allowing access to the first wireless network 1. The identifier 31 may be related to the second wireless network, the mobile device 31 or the subscribed user of the mobile device 31. Once it has been verified 102 that the device 31 is connected to the second wireless network 2, then access to the first wireless network 1 may be granted by providing 103 authorization data. In step 103a access may be granted by providing authorization data 60a to the access server 11, in which case the mobile device 31 may not need to provide access credentials such as a username and password before connection to the first wireless network 1. In step 103b access may alternatively or additionally be granted by providing authorization data 60b in the form of e.g. access credentials to the mobile device 31, which may be used as username and password for connecting the mobile device 31 and/or the wireless device 31a to the first wireless network 1.

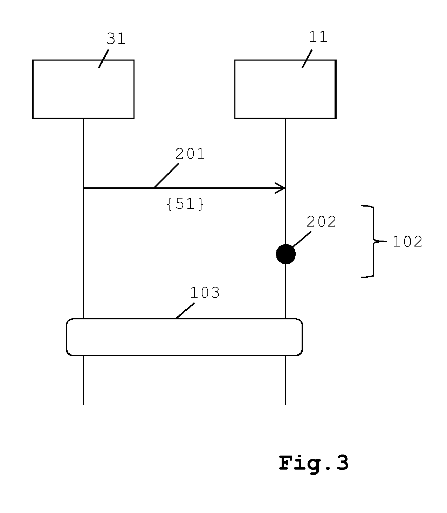

Fig.3 shows a time-sequence diagram of another exemplary embodiment of the invention. In this embodiment the mobile device 31 may be configured to report 201 an indication 51 of being connected to the second wireless network 2 to an access server 11 of a first wireless network 1. The first wireless network 1 is e.g. a Wi-Fi network and the access server 11 may be embedded in a Wi-Fi hotspot. The second wireless 2 network is e.g. a VPLMN of a mobile network operator.

The indication 51 comprises an identifier, e.g. an identifier of the VPLMN, a temporary mobile subscriber identity (TMSI) from which it may be determined that the mobile device is connected to the VPLMN or a cell-ID identifying to which base station in the VPLMN the mobile device 31 is connected. Such information is typically available in the mobile device 31 when connected to the VPLMN 2. Once the hotspot 11 has verified 202 that the device 31 is on the required mobile network 2, e.g. by verifying that the provided identifier of the VPLMN relates to the second wireless network 2, then the access to the Wi-Fi network 1 may be granted by providing 103 authorization data. The authorization data may be provided as indicated in step 103a and/or step 103b of Fig.2.

To enable the mobile device 31 to report 201 the indication 51 of the second wireless network 2 to the access server 11, an app or any other computer programming code may be installed on the mobile device 31. The app may be configured to detect a connection attempt to the first wireless network 1 and in response thereto automatically provide the indication 51 to the access server 11. It is possible that the end-user of the mobile device 31 is presented with a confirmation request prior to transmitting the indication 51 to the access server 11.

The app on the mobile device 31 may be configured to report the selected second wireless network 2 each time a data session is set-up and/or at regular time intervals. If the mobile device 31 is no longer connected to the VPLMN 2, then that may be detected in another verification step similar to the verification step 202 after resending the identification indication 51. In response, access to the first wireless network 1 may be revoked. Typically the access server 11 then receives a revocation message, blocking further access from the mobile device 31 and/or the wireless device 31a to the first communication network 1.

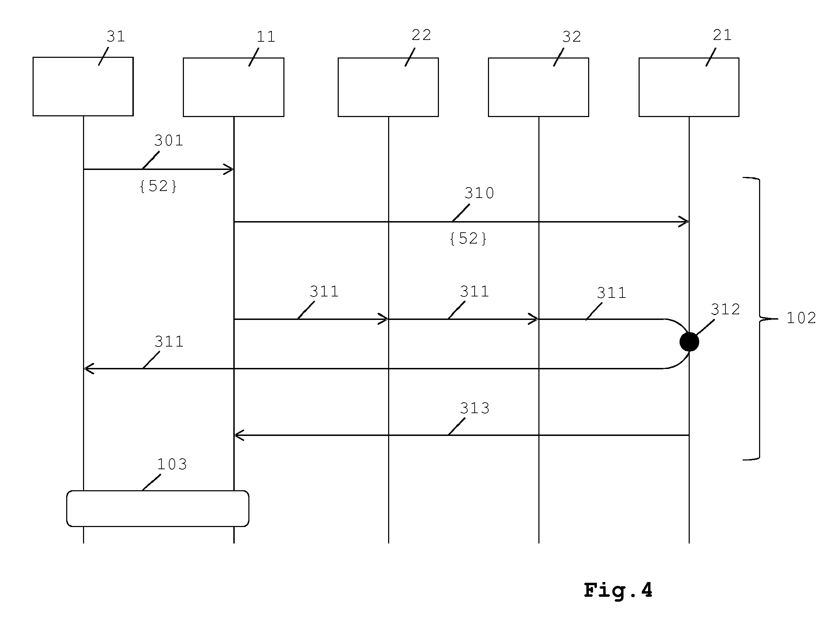

Fig.4 shows a time-sequence diagram of another exemplary embodiment. In this example the first wireless network 1 may be a Wi-Fi network and the second wireless network 2 may be a VPLMN. The user of the mobile device 31 may provide 301 the access server 11 of the Wi-Fi operator his Mobile Subscriber Integrated Services Digital Network-Number (MSISDN) number 52, which typically corresponds with the mobile telephone number of the user. The MSISDN 52 may be provided manually by the user of the mobile device 31, e.g. on the mobile device 31 or the wireless device 31a or on any PC connected to the Internet (not shown), by entering this number in a form field of a web page loaded from a web server 12 to which the access request for accessing the Wi-Fi network 1 may be redirected. In response, the Wi-Fi operator sends 103,103b to this MSISDN an SMS message 311 including e.g. access credentials 60b in the form of a WLAN access code. The user receives the code to gain access to the WLAN network. Typically this SMS message 311 is sent by instructing a message server 22 in the VPLMN 2 to send the SMS message 311 and involves an SMSC 32 in the HPLMN 3 of the mobile device 31. At this stage the mobile device 31 and/or the wireless device 31a may try to connect to the Wi-Fi network 1 using the access credentials 60b, but access to the Wi-Fi network may still be blocked.

In the example of Fig.4, in order to allow access to the Wi-Fi network 1 an interception device 21 located in the VPLMN 2 is watching for the SMS message 311 to pass the VPLMN 2 towards the mobile device 31. If the SMS message 311 is detected 312, then it may be concluded that the mobile device 31 is connected to the VPLMN 2 and an indication hereof may subsequently be transmitted 313 to the access server 11.

When the SMS is being delivered from the SMSC 32 in the HPLMN 3 to the mobile device 31, then various methods may be used to determine if the SMS is processed by the VPLMN 2. For example, the interception node 21 may be implemented as a sniffer on any link or node in the signaling (SS7) flow between the HPLMN 3 and VPLMN 2. The sniffer/interceptor 21 may determine if a unique code that is included in the SMS message is processed by the VPLMN 2. This unique code may be the MSIDSN, a derivation thereof or any other unique code. If the SMS message is not detected, e.g. within a set time interval, then it may be concluded that the mobile device 31 is not attached to the particular VPLMN 2 and WLAN access may be rejected or revoked.

The WLAN operator 1 may send an SMS through either the partner VPLMN SMSC 22 or any other messaging server. The SMSC 32 in the HPLMN 3 of the user of the mobile device 31 (HPLMN) receives the SMS message for further delivery to the mobile device 31. The SMSC 32 of the HPLMN 3 then typically contacts the HLR 34 of the HPLMN 3 to find out in which VLR 23 the user and/or mobile device 31 is registered. A "SRI-for-SM" or "SendRoutingInformationForShortMessage" message may be involved in this. If the HLR 34 knows where to find the subscriber/mobile device 31, it may return the MSC/SGSN in the VPLMN 2 where the subscriber/mobile device 31 can be reached. Once the SMSC 32 has determined the Routing Information, it will send the SMS to the (roaming) user/mobile device 31. In the roaming network 2 the VPLMN operator may monitor 312 on the SS7 signaling links on any intermediate node if the SMS that is destined for the roaming user is processed by that network. If the SMS 311 is processed by the VPLMN 2, the interception node 21 will detect 312 the SMS message and inform 313 the WLAN operator.

Based on this information, the WLAN operator or the access server 11 of the WLAN operator may grant 103 access to the mobile device 31 and/or the wireless device 31 a, possibly for a specified amount of time or predefined data volume.

When the SMS is sent, the network 2 will (possibly using existing technology) inform the WLAN hotspot network 1 that access may be granted 103, e.g. based on a code 60b provided in the SMS. The user may need to fill-in the access code 60b, after which access may be granted.

Once the Wi-Fi connection is setup, it may be verified whether the mobile device 31 is still connected to the VPLMN 2. If this is not the case, access to the Wi-Fi network 1 may be revoked. To this end a timer or volume counter may be used. For example, when the end time of a timer is (or is almost) reached, when a predefined data volume is (or is almost) reached, when a timer expires or when a counter expires, another SMS may be sent to the user/mobile device 31 informing the user that WLAN access will continue for as long as he is still on the VPLMN network 2. As described above, the VPLMN 2 will check if this SMS 311 is processed via the VPLMN 2, else the WLAN operator will be informed to take appropriate measures, e.g. by revoking access.

In the example of Fig.4, the access server 11 may be configured to use an AAA-server 11a in the process of sending the SMS message and verifying whether access to the Wi-Fi network 1 is allowed.

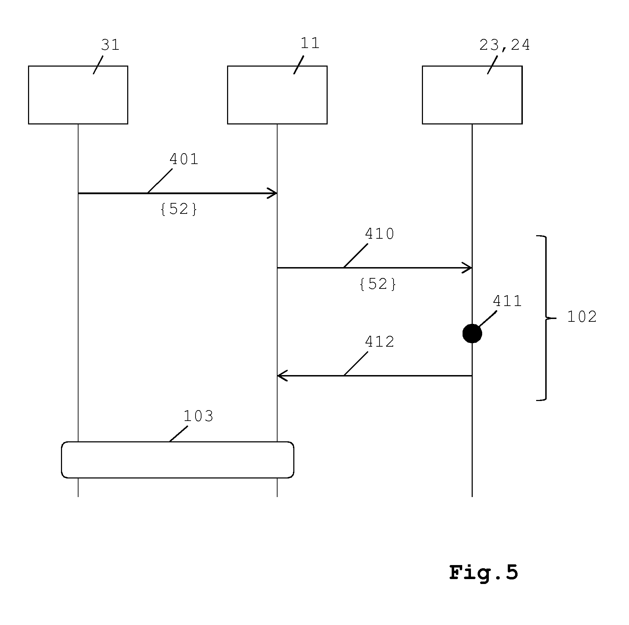

Fig.5 shows a time-sequence diagram of another exemplary embodiment of the invention. In this example the first wireless network 1 may be a Wi-Fi network and the second wireless network 2 may be a VPLMN. The VPLMN 2 may query 410 the VLR 23, which may be integrated in another network node 24, to check 411 whether the MSISDN 52 that the user provided 401 to the access server 11 of the WLAN network 2 is known in the VLR 23 of the VPLMN 2. The MSISDN 52 may be provided manually by the user of the mobile device 31, e.g. on the mobile device 31 or the wireless device 31a or on any PC connected to the Internet (not shown), by entering this number in a form field of a web page loaded from a web server 12 to which the access request for accessing the Wi-Fi network 1 may be redirected. Alternatively or additionally, the MSISDN and/or any identifier 52 that may be stored in the VLR may be obtained by an app or any other software code running on the mobile device 31 and provided by the mobile device 31. The data stored in the VLR 23 typically includes an IMSI (the subscriber's identity number), authentication data, the MSISDN (the subscriber's phone number), a list GSM services that the subscriber is allowed to access, subscribed access point (GPRS), and the HLR address in the HPLMN 3 of the subscriber.

Once the VPLMN 2 has determined 411 that the provided MSISDN 52 is known in the VLR 23, then it may inform 412 the WLAN operator to proceed granting 103 the user/mobile device 31 access. The VPLMN 2 may periodically check 411 if the user/mobile device 31 is still attached in the VLR 23 and take action if this is not the case, such as revoking further access to the Wi-Fi network 1.

In the example of Fig.5, the access server may be configured to use a network gateway 11b for contacting the VLR 23.

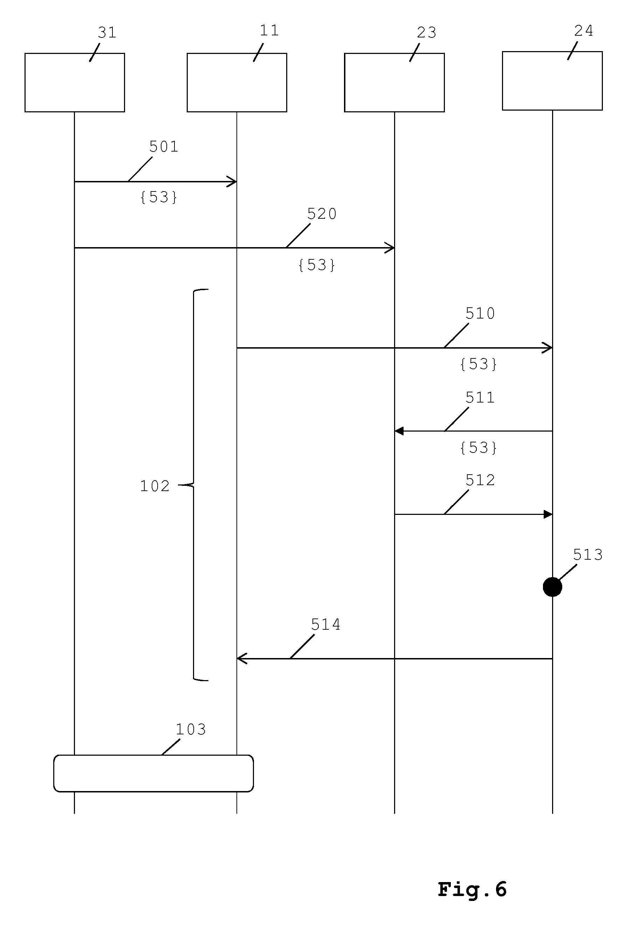

Fig.6 shows a time-sequence diagram of another exemplary embodiment of the invention. In this example the first wireless network 1 may be a Wi-Fi network and the second wireless network 2 may be a VPLMN. The access server 11 may be configured to use an AAA-server 11a in the process of verifying whether access to the Wi-Fi network 1 is allowed.

In the example of Fig.6 a standardized authentication method may be used to exchange authentication information between the mobile device 31 and the access server 11/AAA-server 11a and between the mobile device 31 and the VPLMN 2. An example of such authentication method is based on EAP-SIM and/or EAP-AKA authentication involving an EAP server.

As part of the authentication process, the mobile device 31, when it is still unknown to the first wireless network 1, may release 501 its IMSI 53 (either as a sort of IMSI attach or otherwise) to the network 1. The IMSI 53 may be used to let the WLAN provider 1 know who is the home operator 3 of the mobile device 3. The authentication may then run between the EAP server 11a and the mobile device 31. Alternatively, the EAP server may be a forwarding point to the HLR 34 in the HPLMN 3. In our case, the IMSI 53 may not be used for authorization and accounting, but for authentication purposes only.

The IMSI information 53 provided 501,520 via the access server 11/AAA-server 11a to a verification node 24 in the VPLMN 2, may be cross checked 513 in the verification node 24 with the IMSI 53 of the roaming users as provided 520 in the VPLMN and registered 520 in the VLR 23 of the VPLMN 2. Hereto the verification node 24 queries 511,512 the VLR 23 for the existence of the IMSI 53 in the VLR 23. If there is a match, which may be further checked in step 513, then authorization may be granted 514 for the mobile device 31 and/or the wireless device 31a to access 103 the services offered on the WLAN network 2.

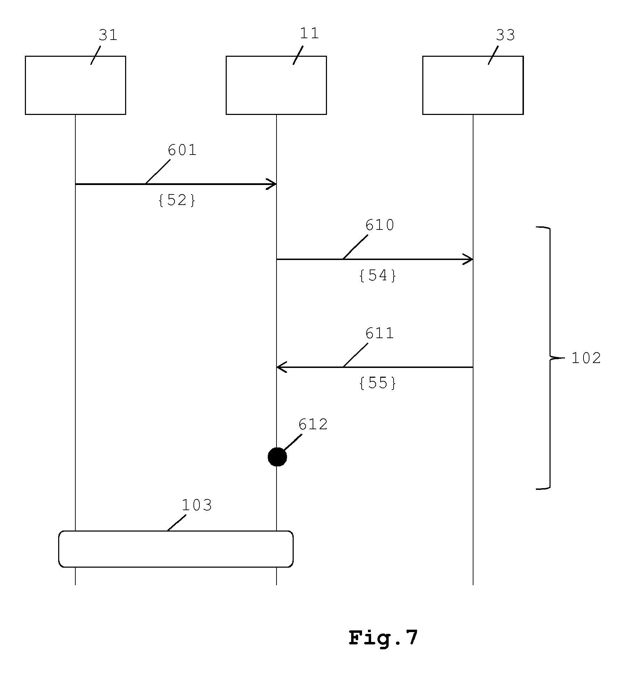

Fig.7 shows a time-sequence diagram of another exemplary embodiment of the invention. In this example the first wireless network 1 may be a Wi-Fi network and the second wireless network 2 may be a VPLMN. The access server 11 may be configured to use an AAA-server 11a in the process of verifying whether access to the Wi-Fi network 1 is allowed. In the example of Fig.7 the WLAN 1 operator may operate independent from the VPLMN 2 operator. In a commercial agreement with a VPLMN 2, the WLAN 1 operator may grant exclusive rights to customers roaming on that particular VPLMN network 2. The WLAN 1 operator may determine the VPLMN 2 where the MSISDN 52 (which is typically provided 601 by the user to the access server 11) is roaming. The MSISDN 52 may be provided manually by the user of the mobile device 31 by entering this number, e.g. on the mobile device 31 or the wireless device 31a or on any PC connected to the Internet (not shown), in a form field of a web page loaded from a web server 12 to which the access request for accessing the Wi-Fi network 1 may be redirected.

The operator of the WLAN 1 (or alternatively the operator of the VPLMN 2) may send 610 an Initial Address Message (IAM) 54 using the MSISDN 52 that the user provided 601 to a GMSC 33 on the HPLMN 3. Typically the IAM message 54 is transmitted 610 via a GMSC, e.g. GMSC 25 in the VPLMN 2, to the GMSC 33 in the HPLMN 3. In response the GMSC 33 of the HPLMN 3 may signal 611 to WLAN 1 operator the destination address 55 to where a mobile phone call is to be routed if placing such call. If the destination address matches 612 an address in the VPLMN 2, then it may be confirmed that the user/mobile device 31 is roaming in the VPLMN 2. The access server 11/AAA-server 11 a may periodically check if the mobile device 31 is still roaming on the VPLMN 2 by periodically initiating the above process.

In general, the user of the mobile device 31 may be given the option to access the WLAN services for an advertised fee, or may be given limited access e.g. for a limited amount of time or for a limited data volume. Hereafter the access procedure may be repeated to grant the user of the mobile device 31 access to the first wireless network 1 again.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory or flash memory) on which alterable information is stored. Moreover, the invention is not limited to the embodiments described above, which may be varied within the scope of the accompanying claims.

## Claims

1. A computer-implemented method for authorizing access to a first wireless network (1), such as a WLAN, using a mobile device (31) that is roaming on a second wireless network (2), such as a visited cellular network or VPLMN, associated with the first wireless network (1), the mobile device (31) being subscribed to a third wireless network (3), such as a home cellular network or HPLMN, the method comprising:
receiving (101,201,301,401,501,601) an identifier (50,51,52,53) from the mobile device (31) in an access server (11) of the first wireless network (1);
the access server (11) verifying (102), based on the identifier (50,51,52,53), whether the mobile device (31) is communicatively connected to the second wireless network (2) to obtain a verification result; and
providing (103,103a) first authorization data (60a) to the access server (11) for allowing the mobile device (31) to access the first wireless network (1) and/or providing (103,103b) second authorization data (60b) to the mobile device (31) for allowing the mobile device (31) and/or a wireless device (31a) to access the first wireless network (1), wherein the providing (103,103a,103b) of the authorization data (60a,60b) is depending on the verification result.

2. The method according to claim 1, wherein the identifier (51) is related to the second wireless network (2) and is obtained from the second wireless network (2) in the mobile device (31) prior to receiving (201) the identifier (51) from the mobile device (31) in the access server (11), and wherein the verifying (102) comprises looking up (202) the identifier (51) in a database that is communicatively connected to the access server (11).

3. The method according to claim 1, wherein the identifier (52,53) is related to the mobile device (31), and wherein the verifying (102) comprises transmitting (310,410,510) the identifier (52,53) to a node (21,23,24) in the second wireless network (2) and in response receiving (313,412,514) an indication that the mobile device (31) is communicatively connected to the second wireless network (2).

4. The method according to claim 3, wherein the node (21) comprises an interception device for intercepting messages in the second wireless network (2), and wherein the verifying (102) further comprises:
transmitting (311) an SMS message to the mobile device (31);
intercepting (312), using the identifier (52), the SMS message in the interception node (21) while the SMS message is being delivered to the mobile device (31); and
transmitting (313) the indication that the mobile device (31) is communicatively connected to the second wireless network (2) from the interception node (21) to the access server (11) if the SMS message is intercepted.

5. The method according to claim 3, wherein the verifying (102) comprises determining whether the identifier (52,53) or a derivation of the identifier is registered in a registration database (23) in the second wireless network (2), such as a visitor location register or VLR, wherein the registration database is configured for registering mobile devices in the second wireless network (2).

6. The method according to claim 5, wherein the node (24) comprises the registration database (23), and wherein the verifying (102) comprises:
looking up (411) the identifier (52) in the registration database (23); and
transmitting (412) the indication that the mobile device (31) is communicatively connected to the second wireless network (2) from the node (24) to the access server (11) if the identifier (52) is found in the registration database (23).

7. The method according to claim 5, wherein the node (24) is communicatively connected to the registration database (23), and wherein the verifying (102) comprises:
transmitting (511) the identifier (53) from the node (24) to the registration database (23);
receiving (512) the indication that the mobile device (31) is communicatively connected to the second wireless network (2) from the registration database (23) in the node (24); and
transmitting (514) the indication that the mobile device (31) is communicatively connected to the second wireless network (2) from the node (24) to the access server (11).

8. The method according to claim 7, wherein the identifier (53) is received from the mobile device (31) in the access server (11) using an authentication protocol, such as EAP-SIM or EAP-AKA.

9. The method according to claim 1, wherein the identifier (52) is related to the mobile device (31), and wherein the verifying (102) comprises transmitting (610) the identifier (52) to a node (33) in the third wireless network (3) and in response receiving (611) an indication (55) that the mobile device (31) is communicatively connected to the second wireless network (2).

10. The method according to claim 9, wherein the verifying (102) comprises transmitting (610) an initial address message (54) to the node (33) using the identifier (52), and wherein the indication (55) comprises a network identifier of the second wireless network (2).

11. The method according to any one of the preceding claims, wherein the verifying (102) is repeated at a predefined trigger, such as lapsing of a predefined amount of time or exceeding a predefined maximum amount of data transmittable and/or receivable by the mobile device (31) and/or the wireless device (31a), and wherein access by the mobile device (31) and/or the wireless device (31a) to the first wireless network (1) is revoked depending on the verification result.

12. The method according to any one of the preceding claims, wherein, depending on the verification result, the authorization data (60b) is provided to the mobile device (31) as access credentials allowing the mobile device (31) and/or the wireless device (31a) to access the first wireless network (1) using the access credentials.

13. The method according to any one of the preceding claims, wherein, depending on the verification result, the authorization data (60a) is provided to the access server (11) allowing the mobile device (31) to access the first wireless network (1) without access credentials.

14. An access server comprising means for carrying out the method according to any one of the claims 1-3 or any one of the claims 9-11.

15. A network node comprising means for carrying out the method according to any one of the claims 4-7.

16. A first wireless network (1), such as a WLAN, that is configured to allow a mobile device (31) and/or a wireless device (31a) access to the first wireless network (1) using the method according to any one of the claims 1-13.

17. A computer program product, which, when being executed by a processor, is adapted to perform the method according to any one of the claims 1-13.
